# EUROPÄISCHE PATENTANMELDUNG

(11) **EP 0 540 821 A1**
(43) Veröffentlichungstag der Anmeldung: **12.05.1993**
(21) Anmeldenummer: 92111251.2
(22) Anmeldetag: 02.07.1992
(51) Int. Cl.: C03C 8/14, C03B 19/06, C03B 19/10

(54) **Verfahren zur Herstellung von Compositglaspulver beliebiger Körnung aus einem feinkörnigen Mehrkomponentengemisch**

(30) Priorität: 02.11.1991 DE 4136115
(71) Anmelder: Schott Glaswerke, D-55122 Mainz (DE); Carl-Zeiss-Stiftung trading as SCHOTT GLASWERKE, D-55122 Mainz (DE)
(72) Erfinder: Ditz, Hermann, W-8300 Landshut (DE); Paschke, Hartmut, Dr., W-8300 Ergolding (DE)

(57) **Zusammenfassung**

Es wird ein Verfahren zur Herstellung von Compositglaspulver beliebiger Körnung aus einem feinkörnigen Mehrcomponentengemisch bestehend aus einem niedrig schmelzenden Glaspulver und Füll- und Zuschlagstoffen beschrieben, bei dem man das feinkörnige Mehrkomponentengemisch 10-60 Minuten bei einer Temperatur, bei der das Grundglas eine Viskosität von 10⁵ bis 10^{6,5} dPas besitzt, sintert und den erhaltenen Sinterkuchen zu einem Pulver gewünschter Körnung mahlt. Für den Fall, daß das Mehrkomponentengemisch unter Gasabspaltung zersetzbare Komponente enthält, werden diese vor dem Sintern bei einer unter der Sintertemperatur liegenden Temperatur zersetzt. Besonders geeignet ist das Verfahren zur Herstellung eines kupferoxidhaltigen Compositglaspulvers zur Beschichtung von Varistoren.

## Beschreibung

Zur Beschichtung von elektrischen und elektronischen Bauteilen, z.B. Von Varistoren, werden Compositglaspulver eingesetzt, die in einer geeigneten Flüssigkeit suspendiert durch Sprühen mittels einer Spritzpistole oder mit anderen geeigneten Verfahren auf das Bauteil in einer Schicht aufgebracht werden und bei einem anschließenden Glasurbrand eine feste Verbindung mit dem Bauteil, z.B. ZnO-Keramik bei Varistoren, eingehen. Compositglaspulver werden eingesetzt, weil mit einem reinen Glaspulver häufig nicht die geforderten mechanischen, elektrischen und chemischen Eigenschaften des Überzuges erreicht werden können.

Compositglaspulver bestehen aus etwa 60-70 Gew.-% eines Grundglases, im allgemeinen eines Bleiboratglases, etwa 15-20 Gew.-% mindestens eines Füllstoffs zur Anpassung des Ausdehnungskoeffizienten, 5-13 Gew.-% einer Verbindung zur Erzielung bestimmter elektrischer Eigenschaften des Überzugs sowie etwa 7-13 Gew.-% SiO₂ zur Verbesserung des Fließverhaltens.

Das Grundglas hat die Aufgabe, einen festen Überzug zu bilden und die übrigen Bestandteile in den Überzug einzubinden.

Der in einer Menge von 15-20 Gew.-% zugegebene Füllstoff hat die Aufgabe, den Ausdehnungskoeffizienten des Überzugs an den der Unterlage anzupassen. Geeignete Füllstoffe sind z.B. β -Eukryptit, Cordierit, Mullit, Zirkonsilikat oder andere Feuerfestmaterialien, Bleititanat, Willemit sowie die als "solid solution" bezeichneten Materialien wie z.B. SnO₂ -TiO₂. Die Füllstoffe können natürlich oder synthetisch hergestellt sein. Besonders bevorzugt werden β-Eukryptit und Cordierit.

Die Mischung enthält ferner noch 5-13 Gew.-% einer Verbindung, mit der sich bestimmte elektrische Eigenschaften, z.B. die Strom-Spannungs-Charakteristik einstellen lassen. Derartige Verbindungen sind z.B. Kupferkarbonat, Kupferoxid, Chromoxid, Silbercarbonat, Wismutoxid, Magnesiumoxid, Manganoxid.

Besonders günstig ist die Verwendung von Kupferkarbonat, da dieses während des Beschichtungsvorganges unter den dabei auftretenden Temperaturen zu einem Kupferoxid mit einer sehr großen spezifischen Oberfläche zerfällt und daher besonders gut in das Grundglas eingebunden werden kann.

Als weiteren Zuschlagstoff enthält das Compositglaspulver noch 7-13 Gew.-% SiO₂ zur Verbesserung des Fließverhaltens. Das SiO₂ kann in Form von Quarzmehl, aber auch in Form von pyrogener Kieselsäure in dem Compositglaspulver vorhanden sein.

Das Grundglaspulver sowie die Füll- und Zuschlagstoffe sind in einem Compositglaspulver in sehr feiner Körnung vorhanden. Die Füllstoffe, die zur Anpassung des Ausdehnungskoeffizienten des Überzugs an den zu überziehenden Gegenstand, im allgemeinen zur Absenkung des Ausdehnungskoeffizienten, zugegeben werden, weichen in ihrem Ausdehnungskoeffizienten normalerweise sehr stark von dem des Grundglases ab. Werden sie in zu grober Körnung verwendet, so kann es zur Bildung von Mikrorissen in der Glasurschicht kommen, wodurch sich die mechanischen und auch elektrischen Eigenschaften der Schicht verschlechtern. Die zur Anpassung des Ausdehnungskoeffizienten verwendeten Füllstoffe werden daher normalerweise mit einer mittleren Korngröße von < 15 µm verwendet. Auch das Grundglas liegt in dem Compositglaspulver mit einer mittleren Korngröße von 4 bis 15 µm, insbesondere einer Korngröße von 6 bis 12 µm vor, da es ansonsten nicht zur gleichmäßigen Einbindung der Füll- und Zuschlagstoffe geeignet ist.

Die zur Modifizierung der elektrischen Eigenschaften eingesetzten Verbindungen sowie das zur Verbesserung des Fließverhaltens zugegebene SiO₂ sollen beim Glasieren mit dem Grundglas reagieren, d.h. sich in ihm zumindest teilweise auflösen. Die für diese Auflösung benötigte Zeit ist um so kürzer, je kleiner die Korngröße dieser Bestandteile bzw. je größer die spezifische Oberfläche dieser Partikel ist. Je schlechter bzw. langsamer die Reaktion dieser Zuschlagstoffe mit dem Grundglaspulver erfolgt, desto feiner müssen die Zuschlagstoffe sein. SiO₂-Pulver lösen sich verhältnismäßig gut, so daß eine mittlere Korngröße von max. 10 µm Verwendung finden kann. Andere Zuschlagstoffe, wie z.B. die zur Einstellung der elektrischen Eigenschaften benutzten Verbindungen, insbesondere CuO, dürfen aufgrund ihrer schlechten Löslichkeit in dem Grundglas nur mit einer maximalen mittleren Korngröße von 4 µm eingesetzt werden. Bei diesen schwer löslichen Verbindungen wird es darüberhinaus bevorzugt, wenn diese Verbindungen nicht als Oxide, sondern in Form von unterhalb der Glasurtemperatur zersetzlichen Verbindungen zugegeben werden, da diese Verbindungen bei der Zersetzung ein sehr reaktives Pulver mit großer spezifischer Oberfläche ergeben, was stark zu einer Verbesserung der Löslichkeit im Grundglas beiträgt. Eine Zugabe der die elektrischen Eigenschaften verbessernden bzw. modifizierenden Zuschlagstoffe bei der Erschmelzung des Grundglases ist im allgemeinen nicht möglich, da das zu einer Entmischung und Kristallisation des Grundglases führt.

Die zur Modifikation der elektrischen Eigenschaften zugegebenen zersetzlichen Verbindungen zersetzen sich beim Aufheizen während des Glasurbrandes. Diese Reaktion benötigt jedoch Zeit, weshalb beim Glasurbrand entweder sehr langsam aufgeheizt werden muß oder eine Haltestufe bei der Zersetzungstemperatur der Verbindung eingelegt werden muß, was den Einbrennprozeß deutlich verlängert. Ein sehr langer Einbrennprozeß führt nicht nur zu langen Taktzeiten, sondern kann auch die Qualität der zu beschichtenden Bauteile verringern.

Ein weiterer Nachteil der bekannten Compositglaspulver liegt darin, daß sie aufgrund der Feinheit des Grundglaspulvers und der Zuschlagstoffe mit sehr viel Suspendiermedium, z.B. Wasser, versetzt werden müssen, um überhaupt einen verarbeitungsfähigen, z.B. sprühfähigen Schlicker zu ergeben. Dieser hohe Anteil an Suspendiermedium führt nun zu schweren Nachteilen. Bei der Trocknung der aufgesprühten oder durch Tauchen oder andere geeignete Verfahren aufgebrachten Schicht findet eine sehr große Trockenschwindung statt und damit verbunden besteht eine große Gefahr der Trockenrißbildung. Die Trockenrißbildung führt aber zu unbrauchbaren Beschichtungen. Weiterhin ist es mit Schlickern, die sehr viel Suspendiermedium enthalten, nicht möglich, ausreichend dicke Schichten aufzubringen, da die Schichten aufgrund des hohen Anteils an Suspendiermedium zum Ablaufen neigen.

Die Aufgabe der Erfindung besteht darin, ein Compositglaspulver zu finden, daß mit einer größeren mittleren Korngröße hergestellt werden kann, ohne daß dabei die guten physikalischen und elektrischen Eigenschaften verloren gehen.

Diese Aufgabe wird durch das in Patentanspruch 1 beschriebene Verfahren gelöst.

Das sehr feinkörnige Mehrkomponentengemisch wird 10-60 Minuten bei einer Temperatur, bei der das Grundglas eine Viskosität von 10⁵₋10^{6.5} dPas besitzt, gesintert. Dabei werden die in dem Grundglas löslichen Komponenten von dem Grundglas angelöst und das Grundglas sowie alle übrigen Füll- und Zuschlagstoffe backen zu einem porösen Sinterglaskuchen zusammen. Die Temperatur, die einer Viskosität von 10⁵ dPas entspricht, soll nicht überschritten werden, da sonst die einzelnen Komponenten des Compositglaspulvers sich zu weitgehend in dem Grundglas lösen, woraus eine Verschlechterung der physikalischen Eigenschaften resultiert. Andererseits sollte auch eine Temperatur, die einer Viskosität des Grundglases von 10^{6.5} dPas entspricht, nicht unterschritten werden, da ansonsten die Reaktion zwischen Grundglas und Füll- und Zuschlagstoffen zu gering ist und keine ausreichende Verbindung zwischen Grundglas und diesen Stoffen zustande kommt.

Innerhalb des Temperaturbereichs, der einer Viskosität von 10^{6,5}-10⁵ dPas entspricht, entsteht ein poröser Sinterkuchen, aus dem sich durch entsprechende Zerkleinerung ein Compositglaspulver erzeugen läßt, daß die guten physikalischen und elektrischen Eigenschaften des Ausgangsmaterials besitzt, ohne jedoch die aus der Feinheit der ursprünglichen Komponenten resultierenden Nachteile zu haben. Insbesondere bleiben die ausdehnungsmodifizierenden Zuschlagstoffe voll wirksam, weil ihre Reaktion mit den anderen Komponenten ausreichend klein bleibt.

Falls sich unter den Zuschlagstoffen ein solcher befindet, der sich unter Gasabspaltung zu einem reaktionsfähigen Zuschlagstoff umwandelt, z.B. Kupferkarbonat, so erhitzt man zweckmäßigerweise das zu sinternde Mehrkomponentengemisch zunächst auf eine unterhalb der Sintertemperatur liegende Temperatur, bei welcher sich diese Verbindung unter Gasabspaltung zersetzt, hält das Gemisch bei dieser Temperatur so lange, bis sich die zersetzbare Verbindung zersetzt hat und erhitzt erst anschließend auf die Sintertemperatur. Durch dieses Halten bei der Zersetzungstemperatur wird erreicht, daß sich die zersetzbare Verbindung zersetzt, ohne daß irgendwelche anderen schädlichen Zeitreaktionen ablaufen.

Besonders geeignet ist die Anwendung dieses Verfahrens auf die Herstellung eines Compositglaspulvers zur Beschichtung von Varistoren. Zur Herstellung eines derartigen Compositglaspulvers wird ein Gemisch aus 60-70 Gew.-% eines Bleiboratglaspulvers mit einer mittleren Korngröße von weniger als 15 µm, 15-20 Gew.-% eines Füllstoffs mit einer mittleren Korngröße von ebenfalls < 15 µm, 5-13 Gew.-% Kupferkarbonat mit einer mittleren Korngröße von < 5 µm und 7-13 Gew.-% SiO₂ mit einer mittleren Korngröße von < 10 µm bei einer Temperatur von 220°C bis 320°C 30-60 Minuten zur Zersetzung des Kupferkarbonats gehalten und anschließend bei einer Temperatur, die einer Viskosität des Grundglases von 10⁵-10^{6,5} dPas entspricht, 10-60 Minuten gesintert.

Als Bleiboratglas wird vorzugsweise ein Glas der Zusammensetzung (in Gew.-% auf Oxidbasis) von 0 bis 5 SiO₂, 5 bis 20 B₂O₃, 60 bis 90 PbO, sowie 0 bis 5 Al₂O₃, 0 bis 30 ZnO, 0 bis 5 BaO und 0 - 3 F verwendet. Besonders gute Ergebnisse erzielt man mit einem Glas der Zusammensetzung 0 - 2 SiO₂, 13 - 16 B₂O₃, 82 - 87 PbO/und 0 - 2 Al₂O₃. Sehr gut brauchbar ist auch ein Glas der Zusammensetzung 86 PbO und 14 B₂O₃.

Als Füllstoff zur Modifizierung des thermischen Ausdehnungskoeffizienten wird vorzugsweise β -Eukryptit und/oder Cordierit und/oder Mullit verwendet. Falls das Kupfer nicht in Form von Kupferkarbonat, sondern in Form von sehr fein gemahlenem Kupferoxid zugegeben wird, kann auf den Halteschritt zur Zersetzung des Kupferkarbonats verzichtet werden und sofort mit beliebiger Geschwindigkeit auf die Sintertemperatur erhitzt werden.

Nach dem Sintern wird der erhaltene poröse Sinterkuchen zu einem Sinterpulver geeigneter Korngrößenverteilung gemahlen. Um eine gute Verarbeitbarkeit des Pulvers, z.B. durch Spritzen oder Tauchen zu gewährleisten, bevorzugt man mittlere Korngrößen von 7 bis 15 µm. Im Bereich dieser Korngrößen kann man auch sehr dicke Schichten auftragen, ohne daß die Schichten zum Ablaufen neigen. Durch die Sinterung kann ferner die Beschichtungszeit gegenüber der Beschichtung mit nicht vorgesintertem Pulver um ca. 50 % verkürzt werden, wodurch eine erheblich geringere thermische Belastung der zu beschichtenden Teile resultiert.

Das Verfahren kann immer dann angewendet werden, wenn Compositglaspulver, die sich nur unter Zuhilfenahme sehr feinkörniger Einzelkomponenten herstellen lassen, aus verarbeitungstechnischen Gründen in gröberen Körnungen benötigt werden und/oder wenn das Compositglaspulver bestimmte Stoffe bzw. bestimmte Verbindungen in der aus diesen hergestellten Glasur enthalten muß, die jedoch nicht bei der Schmelze in das Glas eingebracht werden können, weil sie die Glasbildung negativ beeinflussen, d.h. wenn die für die später entstehende Glasur erforderliche Gesamtzahl von Komponenten nicht primär als Glas erschmolzen werden kann.

### Beispiel

Es wurde eine Mischung aus 63 Gew.-% eines Bleiborat-Grundglases einer Zusammensetzung von 86 Gew.-% PbO und 14 Gew.-% B₂O₃ und einer mittleren Korngröße von 12 µm, 19 Gew.-% β -Eukryptit mit einer mittleren Korngröße von 8 µm als Füllstoff, 9 Gew.-% Quarzmehl mit einer mittleren Körnung von 9 µm und 9 Gew.-% CuCO₃ mit einer mittleren Korngröße von 3 µm hergestellt. Diese Mischung wurde auf eine Temperatur von 260°C erhitzt und 30 min zur Zersetzung des CuCO₃ in CuO auf dieser Temperatur gehalten. Anschließend wurde die Mischung 20 min auf 450°C erhitzt. Bei dieser Temperatur besitzt das Grundglas eine Viskosität von 10⁵ dPa. Anschließend wurde der erhaltene Sinterkuchen abgekühlt und zu einem Pulver der mittleren Korngröße von 12 µm gemahlen. Aus dem Pulver wurde durch Zugabe von demineralisiertem Wasser eine Suspension mit einem Gehalt von 72 Gew.-% des Compositglaspulvers hergestellt.

Diese Suspension wurde auf die Mantelfläche von zylindrischen Varistorkörpern aufgesprüht, wobei eine Schichtdicke der aufgesprühten Schicht von 200 µm erreicht wurde. Nach dem Trocknen wurde die Schicht bei 600°C und einer Haltezeit von 20 Minuten zu einer Glasur hervorragender Qualität gebrannt.

Benutzt man zum Vergleich die ungesinterte Pulvermischung zur Beschichtung, so muß zu dem Pulver zwecks Herstellung einer sprühfähigen Suspension wesentlich mehr Wasser zugegeben werden, so daß der Feststoffanteil der Suspension nur noch 60-65 Gew.-% beträgt. Mit dieser Suspension konnte beim Aufsprühen auf die Mantelfläche der zylindrischen Varistorkörper nur eine Schichtdicke von max. 70 µm erreicht werden. Beim Einbrennen dieser Schicht bei einer Temperatur von 600°C mußte die Haltezeit auf 2 bis 3 Stunden verlängert werden. Die erzeugten Glasurschichten waren teilweise blasig, was zu schlechteren elektrischen Werten (schlechtere Überschlagsfestigkeit) der Varistoren führte.

## Patentansprüche

1. Verfahren zur Herstellung von Compositglaspulver beliebiger Körnung aus einem feinkörnigen Mehrkomponentengemisch, bestehend aus einem Glaspulver und Füll- und Zuschlagstoffen
**dadurch gekennzeichnet,**
daß man das feinkörnige Mehrkomponentengemisch 10 bis 60 Min. bei einer Temperatur sintert, bei der das Grundglas eine Viskosität von 10⁵ bis 10^{6,5} dPas besitzt und den erhaltenen Sinterkuchen zu einem Pulver gewünschter Körnung mahlt.

2. Verfahren nach Anspruch 1,
**dadurch gekennzeichnet,**
daß man für den Fall, daß das Mehrkomponentengemisch unter Gasabspaltung zersetzbare Komponenten enthält, diese vor dem Sintern bei einer unter der Sintertemperatur liegenden Temperatur zersetzt.

3. Anwendung des Verfahrens nach den Ansprüchen 1 und 2 auf die Herstellung eines Compositglaspulvers zur Beschichtung von Varistoren, wobei ein Gemisch aus 60-70 Gew.-% eines Bleiboratglaspulvers mit einer mittleren Korngröße von < 15 µm, 15-20 Gew.-% eines Füllstoffes mit einer mittleren Korngröße < 15 µm, 5-13 Gew.-% CuCO₃ mit einer mittleren Korngröße von < 5 µm und 7-13 Gew.-% SiO₂ mit einer mittleren Korngröße von < 10 µm bei einer Temperatur von 220°C bis 320°C 30 bis 60 Min. zur Zersetzung des CuCO₃ gehalten wird und anschließend bei einer Temperatur, die einer Viskosität des Grundglases von 10⁵ bis 10^{6,5} dPa entspricht, 10 bis 60 Min. gesintert wird.

4. Anwendung des Verfahrens nach Anspruch 3,
**dadurch gekennzeichnet,**
daß ein Bleiboratglaspulver der Zusammensetzung (in Gew.-%) auf Oxidbasis) von
| | |
|---|---|
| 0 bis 5 SiO₂ | 0 bis 5 Bao |
| 5 bis 20 B₂O₃ | 0 bis 3 F |
| 60 bis 90 PbO | |
| 0 bis 5 Al₂O3 | |
| 0 bis 30 ZnO | |
verwendet wird.

5. Anwendung des Verfahrens nach den Ansprüchen 3 oder 4,
**dadurch gekennzeichnet,**
daß als Füllstoff β₋Eukryptit und/oder Cordierit verwendet wird.

6. Verwendung des nach wenigstens einem der Ansprüche 1 bis 5 hergestellten Kompositglaspulvers zur Beschichtung und Einkapselung von elektrischen und elektronischen Bauteilen.
